# EUROPEAN PATENT APPLICATION

(11) **EP 2 413 557 A1**
(43) Date of publication of application: **01.02.2012**
(21) Application number: 10171021.8
(22) Date of filing: 28.07.2010
(51) Int. Cl.: H04L 27/26, H04B 17/00, H04L 27/36

(54) **Test signal in an OFDM receiver**

(71) Applicant: Telefonaktiebolaget L M Ericsson (Publ), 164 83 Stockholm (SE)
(72) Inventor: Sundström, Lars, SE-224 74, Lund (SE); Wilhelmsson, Leif, SE-247 55, Lund (SE); Park, Chester, Santa Clara, CA 95054 (US); Svensson, Jim, SE-22474, Lund (SE)
(74) Representative: Åkerman, Mårten Lennart

(57) **Abstract**

The invention proposes a way of inserting an analog test signal during normal reception into analog blocks of an OFDM receiver in such a way that the reception is either not corrupted at all, or only very little. This is achieved either by inserting the analog test signal in time or frequency where it does not corrupt the received signal, or by accounting for the interfering analog test signal in the decoding process.

## Description

### Technical Field

The invention relates to radio receivers in general and particularly a method of determining inaccuracy of properties of analog blocks in OFDM receivers in a mobile communication system.

### Background

In modern telecommunication systems, the mobile terminals are faced with new and higher requirements. To maximize the data throughput every part of the terminal has to be optimized and imperfections minimized. This applies to all parts of the terminal from the antenna to the display and battery.

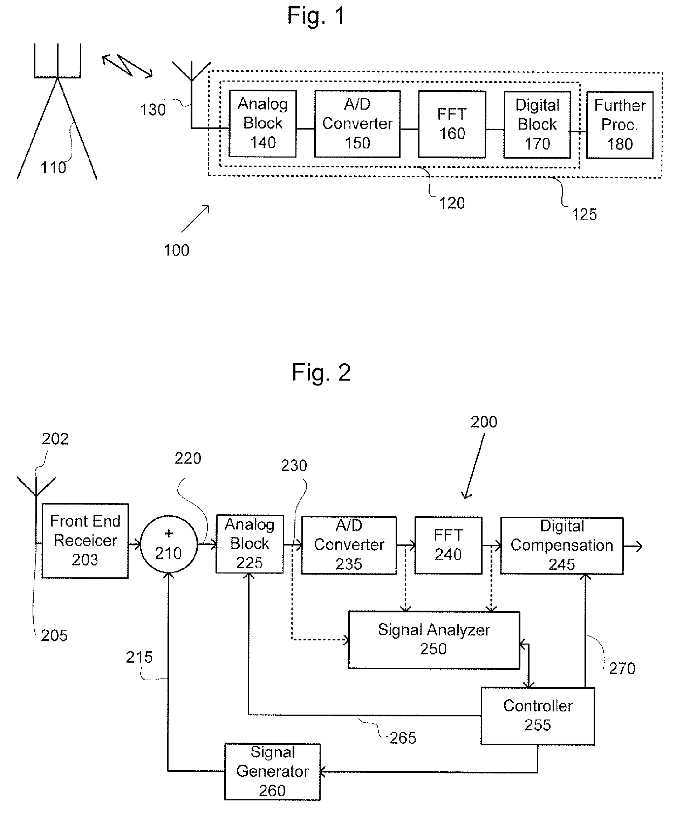

Figure 1 shows a telecommunications system 100 with a base station, BS, 110 and a user equipment, UE, 125 with an antenna 130. The UE comprises a receiver 120 which receives a signal from the antenna and forwards the signal to the rest of the UE for further processing 180. The receiver comprises of one or several analog blocks 140, an analog to digital converter, ADC, 150, a fast Fourier transform, FFT, 160, and one or several digital blocks 170.

The analog blocks 140 may for example be analog filters, local oscillators, analog amplifiers, mixers, and phase shifters The digital blocks may for example provide, additional filtering, resampling, channel estimation, frequency corrections, and error correction decoding. The signal, received by the antenna, called the traffic signal passes through the analog blocks 140 before being digitized in the ADC 150. The traffic signal is defined as the received wireless signal that is received by receiver. The FFT unit 160 transforms the digitized signal from the time domain to the frequency domain before passing through the digital blocks 170. There may also be other digital blocks between the ADC and the FFT.

Whereas the digital blocks 170 have known and well defined properties, the analog blocks 140 have random variations and random offset from desired design values. Undesired properties of analog blocks include component spread between different chips or instances on a chip, temperature dependence, linear and nonlinear distortion, different types of noise such as phase noise ,and different types of signal path mismatch such as I/Q gain and phase imbalance. The random variations of the analog blocks may degrade the performance of the whole receiver 120.

One way to handle the undesired properties of analog blocks is to try to design blocks with smaller amount of undesired properties such as smaller spread or lower noise. This is however not always possible, or might cause negative side effects such as larger chip area, higher power consumption, or longer design time. Another way to handle the undesired properties is to include estimation and calibration or compensation capabilities in the receiver. By estimation, the unknown variations may be estimated by digital signal processing. With calibration the slowly varying properties of analog blocks may be adjusted towards more ideal values by means of control inputs. With compensation, the effect of undesired properties can be compensated for.

Typically, properties of analog blocks are estimated by digital processing from digital signals obtained after analog-to-digital conversion. Some methods estimates properties from the existing traffic signal also used for the normal transmission of data. Other methods use a known test signal that is inserted in the receiver's analog signal processing path, from which the response measured in the digital domain properties may be estimated.

### Summary

It's an object of the present disclosure to overcome at least some of the drawbacks of prior art receivers as disclosed above.

The object is achieved by providing a method of determining properties of an analog block in an Orthogonal Frequency Division Multiplex, OFDM, receiver.

The method involves the steps of receiving a traffic signal at the antenna and adding an analog test signal to the traffic signal. This combined test and traffic signal is inserted into the analog blocks where it is modified by the properties of the analog block into a modified combined test and traffic signal.

The modified combined test and traffic signal is extracted and analyzed after the analog blocks to obtain a measure of the properties of the analog block.

It is advantageous to insert the analog test signal into the traffic signal in such a way that it does not interfere with the ongoing reception of data. This may be done according to several embodiments of the invention. The analog test signal may be inserted during a cyclic prefix of the OFDM signal, outside the frequency range of the traffic signal or on empty resource elements of the traffic signal. The analog test signal may also be inserted on a resource element used by another receiver or the current receiver.

Embodiments of the invention include those where the modified signal is extracted in the analog or in the digital domain. In the digital domain it may also be extracted prior or after a fast Fourier transform.

Embodiments of the invention also include a receiver with logic adapted to implement the method summarized above containing a front end receiver unit, a signal generator, an addition unit, analog blocks and a signal analyzer.

In many cases the test signal based methods provide better performance, compared to pilot-based methods (pilot from the air), because the test signal is not affected by the channel and may have higher power to overcome the noise in the receiver. Also, the test signal may be arbitrarily designed, and thus it eases the estimation of analog properties, since the standard-compatible pilot is generally designed for other purposes, e.g., in favour of channel estimation etc. It is thus beneficial for receiver to use test signal based methods. However the drawback with the use of a test signal inserted into the analog blocks is that the test signal may not without caution be used while receiving a traffic signal or else the test signal will corrupt the traffic signal, and vice versa. Conventional OFDM receivers that insert a test signal must therefore choose during a time period to either insert a test signal to enable estimation, or to not insert a test signal to be able to receive its traffic signal. A conventional receiver thus cannot support both continuous reception of data from the traffic signal, and simultaneous estimation of analog properties. This may be a serious drawback in many scenarios, and an advantage of the invention is that it overcomes this limitation.

The invention enables calibration of OFDM receiver with test signal during continuous reception of data.

### Brief Description of the Drawings

The invention will now be described more fully below with reference to the drawings, in which
Figure 1 illustrates a telecommunications system according to prior art;
Figure 2 illustrates a block diagram according to an embodiment of the invention;
Figure 3 illustrates a flow chart according to an embodiment of the invention;
Figure 4 illustrates a time/frequency grid according to an embodiment of the invention;
Figure 5 illustrates three OFDM symbols according to an embodiment of the invention;
Figure 6 illustrates a representation of an OFDM signal in the frequency domain according to an embodiment of the invention;

### Detailed Description

Figure 2 shows a receiver 200 according to an embodiment of the invention. A traffic signal 205 is received by an antenna 202 and front end receiver 203. The traffic signal passes through the analog blocks 225, An ADC 235 and an FFT 240. These blocks are essentially the same as the corresponding blocks in figure 1.

An analog test signal 215 is added in an addition unit 210 to the traffic signal 205 to form a combined test and traffic signal 220. The analog test signal 215 is added simultaneously as the receiver is receiving data on the traffic signal 205. The combined test and traffic signal 220 is inserted into the analog block 225 to measure the properties of the analog block 225, as will be discussed below.

The properties of the analog block 225 transforms the combined test and traffic signal 220 into a modified combined test and traffic signal 230. The modified combined test and traffic signal 230 is extracted by a signal analyzer 250. The modified combined test and traffic signal 230 may be extracted as an analog signal after the analog block, or as a digitized signal after the ADC 235 or as a frequency domain signal after the FFT unit 240. The signal analyzer analyzes the modified combined test and traffic signal 230 and estimates the properties of the analog block 225.

The analog test signal 215 is generated by a signal generator 260. The signal generator receives information about at which time point, and also information where in the frequency domain, on which sub-carrier frequencies the analog test signal shall be added. This information is received from a controller 255. Time point is here defined as a start time and duration of the analog test signal.

The controller receives information from the signal analyzer about the properties of the analog block. The controller may modify the properties of the analog block 225 by sending an analog modification signal 265 to the analog block. The properties that can be modified include gain, phase, and transfer function of blocks as well as imbalance between gain, phase, and transfer function of blocks. The controller may also provide information to compensate the modified combined test and traffic signal for the properties of the analog block in a digital compensation unit 245. The controller sends in that case a compensation signal 270 to the digital compensation unit 245. The digital compensation unit may implement any of the known methods in the art to compensate the digital signal, including DC-compensation, IQ-imbalance compensation, and common phase error correction.

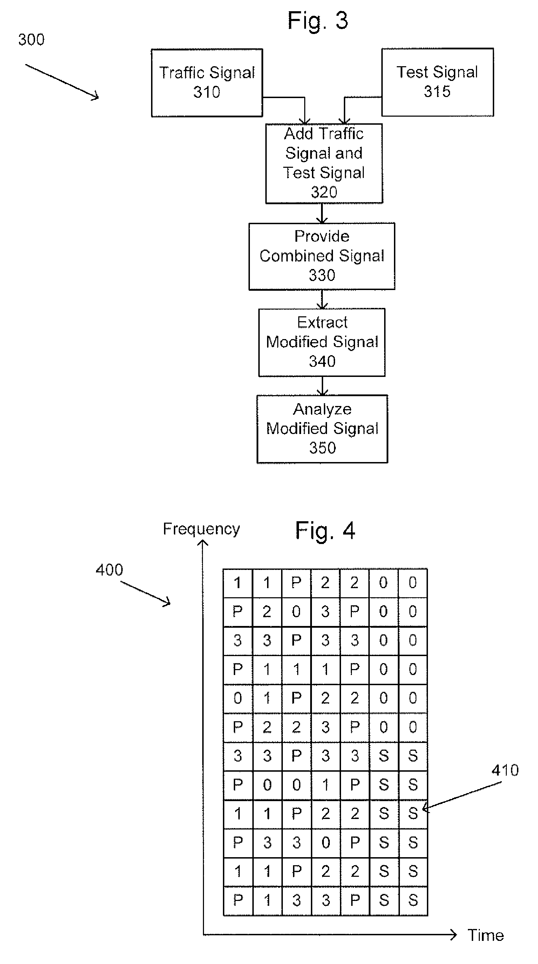

Figure 3 shows a flow chart 300 according to an embodiment of the invention. In step 310 the traffic signal 205 is received by the receiver 200. An analog test signal 215 is provided by the signal generator 260 in step 315. In step 320 the analog test signal is added to the traffic signal 215. Details regarding the addition of the test signal to the traffic signal will be discussed below in connection with a number of embodiments. In step 330 a combined test and traffic signal 220 is provided after the addition. This combined test and traffic signal 220 is provided to the analog block 225. In step 340 the combined test and traffic signal has been transformed according to the properties of the analog block. This modified combined test and traffic signal 230 is extracted by the signal analyzer 250. In step 350 the signal analyzer 250 analyzes the modified combined test and traffic signal 230 to estimate the properties of the analog block 225.

To ensure that the receiver 200 still can decode the data in the traffic signal 205 that is sent to the UE the signal generator 260 inserts the analog test signal in a way that it interferes as little as possible with that data. Several embodiments of the invention of how the analog test signal is generated will be discussed below.

To avoid generating inter carrier interference ICI, and to enable analysis after the FFT, it is preferred if the analog test signal is essentially a sum of one or more tones that aligns with frequencies of FFT-bins. But it is understood that a small leakage into neighboring subcarriers will also work.

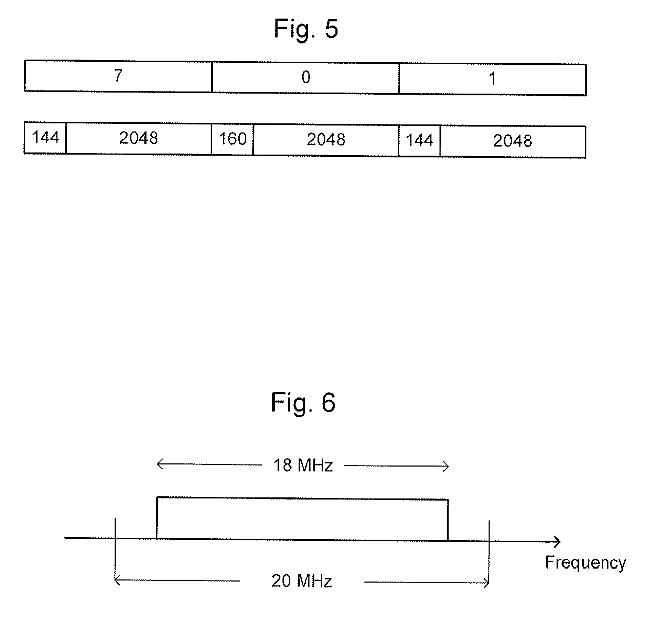

In some embodiments the analog test signal 215 is inserted only within a cyclic prefix, CP, or else it might corrupt the used part of the OFDM symbol. To increase the signal to noise ratio of the analog test signal the traffic signal 205 may during the period of the CP be blocked at a point in the processing chain before the point of insertion. Note that this does not mean that the traffic signal 205 cannot be received, because the traffic signal is still received during the used part of the OFDM symbol. A CP is used in OFDM systems to protect transmitted symbols from inter symbol interference, ISI, due to time dispersion in the radio channel, and analog and digital filters. After ADC the CP is typically discarded before the FFT is applied. This means that part of the received CP may be discarded already in the analog signal path and replaced with the analog test signal. In this case it might be necessary to keep a portion of the last part of the CP to protect against the dispersion of the analog and digital filters. The length of portion to keep depends on the specifics of the used filters. In practice, temporarily switching off the input signal in favor of the analog test signal also need to account for the presence of strong interfering signals, in particular if the desired signal is weak. The dispersion introduced by filters also applies to interfering signals. Additional margins in time may therefore be required in such scenarios. In case some interference affects the next symbol after the CP which has been used for the analog test signal it is also possible to account for the lower quality of the symbol in the decoding process. Figure 5 shows 3 symbols around the slot boundary in long term evolution, LTE. The second row indicates the number of samples in the CP and in the data part of the symbol. As seen symbol 0 has a longer CP than the other symbols, and is thus the most suitable CP to use with this method. As an example, assume 4 µs of the CP may be used. Then test tones at multiples of 1/4µs = 250 kHz or higher may be used. For the LTE 1.4 MHz mode (1.1 MHz used bandwidth) the following 5 test tones, which also coincide with 15 kHz subcarrier spacing, may then be used; {-2,-1, 0,+1,+2}×255 kHz. For the larger bandwidth more test tones may be used. Additional means to provide a longer duration to use for the analog test signal is to move the FFT window for the last symbol (number 7) in a slot as early as possible, in which case the delay spread of the channel and the tolerable ISI must be considered.

In some embodiments the analog test signal is inserted just outside the frequency range of the traffic signal.

In an OFDM system there is to enable realistic filters to be used in the receiver typically unused frequency space at both sides of the band of used subcarriers for a given channel. In for example LTE 20 MHz mode the guard band on each side is about 1 MHz, which corresponds to about 66 subcarriers. This is illustrated in figure 6. Because the guard bands are used for the transition region of the filters (mostly the digital), it is not possible to use all subcarriers for the analog test signal. But it is reasonable to assume that one or two on each side of the band of used carriers are possible to use. To avoid the inaccuracy of the analog filter in the transition region, and the sharp transition of the digital filters it is preferred if the analog test signal are close to the received channel rather than the adjacent channel.

Figure 4 shows an example of a time/frequency grid 400 of the traffic signal for LTE. Every block 410 in the grid represents a resource element. A resource element is defined to occupy one OFDM symbol in time and one sub carrier in frequency. A resource element may be one of several types. Resource elements in the figure denoted S indicates that the resource element contain synchronization information enabling the UE to synchronize with the BS. Resource elements denoted P indicates that the resource element is a pilot, enabling the UE to for example estimate the radio channel between the BS and the UE. Both S-elements and P-elements may be received by all UEs in the cell.

A 0 indicates that the resource element currently is empty, i.e. no information is sent from the BS on that resource element to any UE. Resource elements indicated with 1, 2 or 3 indicates that those resource elements contain data aimed for three different UEs.

In some embodiments the analog test signal may be inserted on an empty resource element.

In LTE slot 0 and slot 5 comprises synchronization elements. The resource elements above the synchronization elements are always empty in slot 0 and 5. This is illustrated in the upper right corner of figure 4. In some embodiments the analog test signal is inserted on these resource elements 410. It is also possible for the UE to insert the analog test signal on any other empty resource element. In some cases the UE has to identify which resource elements are empty by reading scheduling information from the BS. The analog test signal may be inserted on one or several resource elements.

In a system like LTE different users may be allocated different resource elements on one OFDM symbol. Some resource elements may also be common to several users, but might not always be needed for every user. In a fourth embodiment of the invention it is thus possible to superimpose the analog test signal on resource elements not currently used or needed for the given user without interfering with the data for that user. For LTE this include Physical Downlink Shared Channel PDSCH in which some resource elements are assigned to at least one different user, or PDCCH in which some resource elements are for a different set of users, or synchronization elements which might not be needed for a user once synchronization is complete. For some types of resource elements the allocation is given by control signaling and may thus be known in advance for several OFDM symbols. When the analog test signal is inserted on already occupied resource elements the analog test signal is interfered by the data on the superimposed resource elements. Without additional steps this would typically lead to too noisy test signal. Two means to improve the Signal to Noise Ratio, SNR, of the analog test signal is to use higher power on the analog test signal and to average over several sub carriers. Averaging can be done either over time, or over frequency or a combination thereof. Typically it will be possible without negative effect on the analog blocks to use higher power on the analog test signal than the normal power on the resource elements because the power of the analog test signal should still be small compared to whole total power. To have better control over the SNR of the analog test signal the power of the analog test signal may also depend on the estimated power of one or more other received resource elements.

The analog test signal may be superimposed on resource elements assigned to the given UE. In case the approximate response of the analog test signal is known it may be subtracted from the affected resource elements. If the response of the analog test signal cannot be estimated then the affected resource elements may be given low reliability in the further decoding process, which would lead to small performance loss. With this method the SNR of the analog test signal may be further improved by subtracting the known data transmitted on the resource element after decoding.

For several embodiments it is preferred that the start time and stopping time of the analog test signal do not lie within the FFT window because that would cause inter carrier interference on all subcarriers. In other words, the analog test signal should preferably start and stop somewhere in CPs which are discarded before the FFT, but the duration of analog the test signal may span one or more OFDM symbols.

## Claims

1. A method in an Orthogonal Frequency Division Multiplex, OFDM, receiver (200) for determining properties of an analog block, comprising
- concurrently receiving (310) a traffic signal (205) and (315) an analog test signal (215),
- adding (320) the analog test signal (215) to the traffic signal (205), thereby obtaining a combined test and traffic signal (220)
- providing (330 the combined test and traffic signal (220) to the analog block (225)
- extracting (340) a modified combined test and traffic signal (230) from the analog block (225)
- analyzing (350) the modified combined test and traffic signal (230) whereby a measure of the properties of the analog block (225) is obtained

2. The method according to claim 1, comprising
determining a time point at which the analog test signal (215) is to be added and wherein the addition (320) of the analog test signal (215) is performed at the determined time point

3. The method according to claim 2, wherein
the time point is during a Cyclic Prefix, CP, of the traffic signal (205)

4. The method according to claim 1, comprising
determining a frequency at which the analog test signal (215) is to be added, and wherein the addition (320) of the analog test signal (215) is at the determined frequency

5. The method according to claim 4, wherein
the frequency of the analog test signal (215) is outside the frequency range of the traffic signal (205)

6. The method according to claim 5, wherein the frequency of the analog test signal (215) is close to the frequency range occupied by the traffic signal (205)

7. The method according to claim 2 and 4, wherein
the time and the frequency for the addition (320) of the analog test signal (215) to the traffic signal (205) correspond to an empty Resource Element, RE, (410) of the traffic signal (205)

8. The method according to claim 7, wherein
the empty RE (410) is during a time slot with synchronization signals and where the frequency of the empty RE (410) is above or below the synchronization signals

9. The method according to claim 2 and 4, wherein
the time and the frequency for the addition (320) of the analog test signal (215) to the traffic signal (205) is on a RE (410) not used by the OFDM receiver (200)

10. The method according to claim 2 and 4, wherein
the time and the frequency for the addition (320) of the analog test signal (215) to the traffic signal (205) is on a RE (410) used by the OFDM receiver (200)

11. The method according to claim 1, wherein
analyzing (350) the modified combined test and traffic signal (230) occurs after converting the modified combined test and traffic signal (230) to a digital signal by a Analog to Digital Converter, ADC, (235) and after transforming the signal into the frequency domain by a Fast Fourier Transform, FFT (240)

12. An Orthogonal Frequency Division Multiplex, OFDM, receiver (200) comprising,
- a front end receiver unit (210) adapted to receive a traffic signal (205),
- a signal generator (260) adapted to generate an analog test signal (215),
- an addition unit (210) adapted to add (320) the analog test signal (215) to the traffic signal (205) to obtain a combined test and traffic signal (220)
- an analog block (225) adapted to receive the combined test and traffic signal (220) and provide a modified combined test and traffic signal (230)
- a signal analyzer (250) adapted to analyze (350) the modified combined test and traffic signal (230) to measure of the properties of the analog block (225)

13. The receiver (200) according to claim 12, wherein
the signal generator (260) is adapted to determine at least one of the time point and the frequency of the analog test signal (215), and where the addition (320) of the analog test signal (215) to the traffic signal (205) is performed at at least the determined time point and determined frequency
